# EUROPÄISCHE PATENTSCHRIFT

(11) **EP 3 266 548 B1**
(45) Veröffentlichungstag und Bekanntmachung des Hinweises auf die Patenterteilung: **14.11.2018**
(21) Anmeldenummer: 16178535.7
(22) Anmeldetag: 08.07.2016
(51) Int. Cl.: H01R 43/02

(54) **STECKERLÖTHILFE**
SOLDERING JIG
GABARIT POUR POSITIONNER DES PIÈCES À BRASER

(43) Veröffentlichungstag der Anmeldung: 10.01.2018
(73) Patentinhaber: Helmholtz-Zentrum Geesthacht Zentrum für Material- und Küstenforschung GmbH, 21502 Geesthacht (DE)
(72) Erfinder: Moser, Jan, 21502 Geesthacht (DE)
(74) Vertreter: Uexküll & Stolberg

(56) Entgegenhaltungen:
- US-A- 2 221 108
- US-A- 2 397 052
- US-A1- 2013 270 758
- Radical Rc: "Soldering Irons & Jigs Radical RC", , 23. April 2016 (2016-04-23), XP055332027, Gefunden im Internet: URL:http://web.archive.org/web/20160423020 050/http://www.radicalrc.com/category/Sold ering-Irons--Jigs-201 [gefunden am 2017-01-04]

## Beschreibung

Die vorliegende Erfindung betrifft eine Steckerlöthilfe zum Anlöten von Einzel- und/oder Leitungsadern an einen Stecker, gemäß dem Oberbegriff des Anspruchs 1, wie beispielsweise aus XP055332027 bekannt. Sie umfasst einen Steckerhalter mit einem ersten Standfuß und einen Leitungshalter mit einem zweiten Standfuß. Der Steckerhalter weist einen Grundkörper auf, der an dem ersten Standfuß angeordnet und relativ zu diesem um eine Drehachse drehbar ist.

Das Verlöten von Einzel- und/oder Leitungsadern an Steckerkontakte ist eine der typischen und häufig durchgeführten Aufgaben in einer Elektrowerkstatt. Beim Anlöten von Einzel- und/oder Leitungsadern an Steckerkontakte bedient ein Handwerker üblicherweise den Lötkolben mit der einen Hand und führt mit der anderen Hand den Lötdraht. Dabei sieht sich der Handwerker häufig mit dem Problem einer fehlenden geeigneten Fixierung bzw. Halterung des zu verlötenden Steckers, welcher in vielen Fällen eine runde Form und/oder sehr kleine Abmessungen hat, und der zu verlötenden Einzel- und/oder Leitungsadern konfrontiert.

Um den gewünschten Löterfolg zu erzielen, ist eine gute Vorbereitung des Lötvorgangs z.B. durch Bringen der Einzel- und/oder Leitungsadern in eine Position, in der sie direkt verlötet werden können, wesentlich. Auch müssen ungewünschte Bewegungen des Steckers beim Lötvorgang, welche zu unkontrollierten Ergebnissen führen können, vermieden werden. Häufig wird daher in der Praxis, gerade im Fall von runden Steckern, eine Halterung hilfsweise improvisiert, um so den Stecker während des Lötens zu halten und das gewünschte Ergebnis zu erzielen.

Eine Steckerlöthilfe, die den Stecker während des Lötvorgangs fixiert, ist beispielsweise der Steckerhalter "Napier's Solder Jig Guillotine Connector Clamp Kit", welcher auf der Homepage www.radicalrc.com angeboten wird (Stand 24.05.2016), und der ein Zubehörteil der Löthilfe "Napier's Solder Jig Bench" ist, die auch eine Leitungsklemme aufweist. Der Steckerhalter umfasst einen Klemmmechanismus, in dem ein Stecker durch seitliches Klemmen in dem Steckerhalter fixiert wird. Des Weiteren ist der Steckerhalter magnetisch an einem von der Löthilfe ausgehenden Standfuß befestigt und sowohl frei dreh- als auch verschiebbar.

Jedoch ist eine genaue Ausrichtung des Steckers relativ zu den anzulötenden Einzel- und/oder Leitungsadern oder der Leitung in der Leitungsklemme bei Drehung des Steckers aufgrund der freien Beweglichkeit und Drehbarkeit des Steckerhalters um einen beliebigen Drehpunkt problematisch. Auch kann es aufgrund der Bauart des Steckerhalters der Fall sein, dass der Stecker an seinen nicht zu verlötenden Kontakten, d.h. der einzusteckenden Steckerseite, anstatt an seinem Gehäuse durch den Steckerhalter gehalten wird. Dadurch kann es zu Beschädigungen der Kontakte kommen, was im äußersten Fall dazu führen kann, dass der Stecker nicht in eine zugehörige Kupplung eingesteckt werden kann.

Es ist daher Aufgabe der Erfindung, eine Steckerlöthilfe sowie ein Verfahren zum Verlöten von Steckern mit Einzel- und/oder Leitungsadern mit Hilfe einer Steckerlöthilfe bereitzustellen, die die oben beschriebenen Probleme vermeidet.

Zur Lösung dieser Aufgabe dienen die Merkmale der unabhängigen Patentansprüche 1 und 14. Vorteilhafte Ausführungsformen der Vorrichtung sind Gegenstand der zugehörigen Unteransprüche.

Die erfindungsgemäße Steckerlöthilfe ist dadurch gekennzeichnet, dass die Drehachse des Grundkörpers ortsfest ist. Darüber hinaus umfasst der Steckerhalter weiter einen austauschbaren Aufsatz mit einer Steckeraufnahme und eine Zentriereinrichtung zum Zentrieren des Aufsatzes. Die Zentriereinrichtung ist am Grundkörper angeordnet und weiter ausgebildet, den Aufsatz derart zu zentrieren, dass die Steckeraufnahme mittig zur Drehachse des Grundköpers positioniert ist.

Das erfindungsgemäße Verfahren verwendet zum Verlöten von Steckern mit Einzel- und/oder Leitungsadern die erfindungsgemäße Steckerlöthilfe.

Mit Hilfe der erfindungsgemäßen Vorrichtung und durch Verwendung des erfindungsgemäßen Verfahrens ist ein präzises Arbeiten möglich. Die mit Hilfe des Leitungshalters fixierten Einzel- und/oder Leitungsadern können an einem in der Steckeraufnahme des Aufsatzes fixierten Stecker vor dem Löten in die gewünschte Position gebracht werden. Aufgrund der Fixierung des Steckers einerseits und der Fixierung der Einzel- und/oder Leitungsadern andererseits, verbleiben diese an ihrem Ort bis zum Abschluss des Lötvorgangs. Dadurch wird die Qualität des Arbeitsergebnisses verbessert.

Im Rahmen der vorliegenden Erfindung wird unter der Formulierung, dass die Steckeraufnahme mittig zur Drehachse des Grundköpers positioniert ist, verstanden, dass ein auf der Stirnfläche des Aufsatzes liegender Flächenschwerpunkt der Steckeraufnahme auf der Drehachse des Grundkörpers liegt.

Die mittige Positionierung der Steckeraufnahme relativ zu der Drehachse des Grundkörpers bewirkt, dass der geometrische Schwerpunkt eines Steckers, der sich in der Steckeraufnahme des Aufsatzes befindet, auf der Drehachse des Grundkörpers liegt. Folglich kann der in der Steckeraufnahme fixierte Stecker zusammen mit dem Grundkörper um seinen geometrischen Schwerpunkt gedreht werden. Dies hat den Vorteil, dass die nach einer Drehung anzulötenden Einzel- und/oder Leitungsadern während des Lötvorgangs ebenfalls nur gedreht und nicht nachgeführt werden müssen. Beispielsweise weist der Aufsatz eine kreisförmige Außenkontur auf, wobei die Steckeraufnahme derart angeordnet ist, dass ein in der Stirnfläche des Aufsatzes liegender Flächenschwerpunkt der Steckeraufnahme mit dem Mittelpunkt des kreisförmigen Aufsatzes zusammenfällt.

Ein weiterer Vorteil der Erfindung liegt darin, dass die Zeit, die man für das Anlöten der Einzel- und/oder Leitungsadern an die Steckerkontakte benötigt, reduziert wird. Es müssen keine improvisierten Hilfskonstruktionen mehr zur Fixierung des Steckers gebaut werden. Beispielsweise kann die Steckerlöthilfe mehrere unterschiedliche Aufsätze umfassen, die jeweils unterschiedliche Steckeraufnahmen aufweisen. Dadurch wird ermöglicht, dass jede Steckerform schnell durch geeignete, angepasste Aufsätze fixiert werden kann. Beispiele für Steckerformen können typische im Handel erhältliche, d.h. kommerziell erhältliche Stecker wie z.B. Cinch-Stecker, DVI-Stecker, Firewire-Stecker, Klinkenstecker, PS/2-Stecker, S-Video-Stecker, VGA-Stecker, D-SUB Stecker, Lemo-Stecker, oder individuelle Sonderformen sein. Schließlich können die individuellen Aufsätze für jede Gehäuseform eines Steckers so ausgebildet sein, dass sie den Stecker an dessen Gehäuse und nicht an seinen äußeren Kontakten halten.

Gemäß einer Ausführungsform weist der Leitungshalter eine Klemmvorrichtung auf, wobei die Drehachse des Grundkörpers in Richtung der Klemmvorrichtung der Leitungshalter zeigt. Bevorzugt ist die Drehachse auf die Klemmvorrichtung ausgerichtet. Dies hat den Vorteil, dass bei einer Drehung eines sich im Aufsatz befindlichen Steckers die anzulötenden Einzel- und/oder Leitungsadern während des Lötvorgangs zum Verlöten ebenfalls nur gedreht anstatt aufgrund eines Versatzes nachgeführt werden müssen.

Gemäß einer bevorzugten Ausführungsform ist die Klemmvorrichtung des Leitungshalters relativ zu dem zweiten Standfuß um eine zweite Drehachse drehbar und optional arretierbar, wobei die Drehachse des Grundkörpers und die zweite Drehachse der Klemmvorrichtung parallel zueinander angeordnet sind. Optional fluchten die Drehachse des Grundkörpers und die zweite Drehachse der Klemmvorrichtung miteinander. Diese Eigenschaft vereinfacht das Handling der anzulötenden Einzel- und/oder Leitungsadern bzw. der geklemmten Leitung nach einer Drehung des Steckers im Aufsatz.

Gemäß einer weiteren Ausführungsform weist der Steckerhalter einen Arretiermechanismus auf, der ausgebildet ist, den Grundkörper in vordefinierten Winkelschritten um die Drehachse zu arretierten oder, eine manuelle Arretierung des Grundkörpers in beliebig wählbaren Winkelschritten zu ermöglichen. Dadurch wird der Lötvorgang weiter vereinfacht, da der Stecker in unterschiedlichen Winkelpositionen automatisch arretiert wird oder manuell arretiert werden kann.

Vorteilhafterweise ist der Arretiermechanismus ausgebildet, den Grundkörper in 90 Grad Winkelschritten um die Drehachse zu arretierten. In den sich daraus ergebenden vier unterschiedlichen Positionen sind üblicherweise alle Einzel- und/oder Leitungsadern sowie alle Steckerkontakte der üblichen Stecker frei zugänglich.

Bevorzugt weist die Zentriereinrichtung wenigstens ein Führungselement auf, das am Grundkörper angeordnet ist und der Aufsatz umfasst wenigstens eine Ausnehmung, wobei die Ausnehmung auf das Führungselement aufsteckbar ist. Bevorzugt sind die Führungselemente als zylindrische Vorsprünge oder Führungsstifte und die Ausnehmungen als entsprechend geformte Bohrungen ausgebildet.

Gemäß einer Ausführungsform ist der Aufsatz ausgebildet, den Stecker in der Steckeraufnahme zu klemmen, einzuspannen oder mittels Schrauben oder Magneten zu fixieren. Es versteht sich, dass auch andere Befestigungsmöglichkeiten denkbar sind, die ein temporäres Fixieren des Steckers in der Steckeraufnahme ermöglichen.

Gemäß einer bevorzugten Ausführungsform ist der Aufsatz an dem Grundkörper geklemmt, gespannt, geschraubt oder magnetisch fixiert. Dies ermöglicht ein einfaches Lösen und damit wechseln des entsprechenden Aufsatzes.

Optional ist die Steckeraufnahme des Aufsatzes geeignet, einen kommerziell erhältlichen Stecker aufzunehmen. Im Rahmen der vorliegenden Erfindung werden unter dem Begriff "kommerziell erhältliche Stecker" typische im Handel erhältliche Stecker verstanden, wie beispielsweise Cinch-Stecker, DVI-Stecker, Firewire-Stecker, Klinkenstecker, PS/2-Stecker, S-Video-Stecker, VGA-Stecker, D-SUB Stecker, Lemo-Stecker, oder individuelle Sonderformen.

Gemäß einer weiteren Ausführungsform ist die Steckeraufnahme des Aufsatzes geeignet, einen D-Sub Stecker und/oder einen Lemo-Stecker aufzunehmen. Dies ermöglicht einen breiten Einsatzbereich der Steckerlöthilfe.

Optional weist der Steckerhalter eine zusätzlich Klemme auf, bevorzugt ist die Klemme an einem flexiblen Arm befestigt. Mit einer solchen Klemme können Einzeladern vor dem Lötvorgang gezielt in unmittelbarer Nähe des Steckerkontakts, an dem die Einzelader verlötet werden soll, positioniert werden. Die Klemme kann beispielsweise am ersten Standfuß befestigt sein. Besonders bevorzugt ist eine Ausführungsform bei der der Steckerhalter und der Leitungshalter auf einer Platte befestigt sind. Bevorzugt sind der Steckerhalter und der Leitungshalter in verschieden wählbaren Abständen voneinander befestigt. Dadurch kann die Steckerlöthilfe an die individuellen Eigenschaften der anzulötenden Einzel- und/oder Leitungsadern wie beispielsweise eine hohe oder niedrige Flexibilität der Einzel- und/oder Leitungsadern angepasst werden. Eine starre Einzel- und/oder Leitungsader selbst benötigt bei großen Leitungsquerschnitten beispielsweise im Vergleich zu hochflexiblem Material einen größeren Abstand zum Stecker, um die notwendigen Biegeradien der Einzel- und/oder Leitungsadern zu gewährleisten.

Gemäß einer Ausführungsform sind der Steckerhalter und/oder die Leitungshalter in der Höhe verstellbar. Dies hat den Vorteil, dass der Leitungshalter auch bei großen Durchmessern der Einzeladern oder der zum Stecker zugeführten Leitungen relativ zum Zentrum des Steckers ausgerichtet werden kann.

Im Folgenden wird die Erfindung anhand von lediglich Ausführungsformen zeigenden Zeichnungen weiter erläutert. Diese Abbildungen sind beispielhaft zu verstehen und schränken die Erfindung nicht ein. Dabei zeigt
- Figur 1: eine Seitenansicht der erfindungsgemäßen Steckerlöthilfe,
- Figur 2: eine perspektivische Ansicht der erfindungsgemäßen Steckerlöthilfe aus Figur 1 mit einem von dem Grundkörper abgehobenem Aufsatz, und
- Figur 3: eine Draufsicht auf eine Ausführungsform eines Aufsatzes für einen D-Sub Stecker.

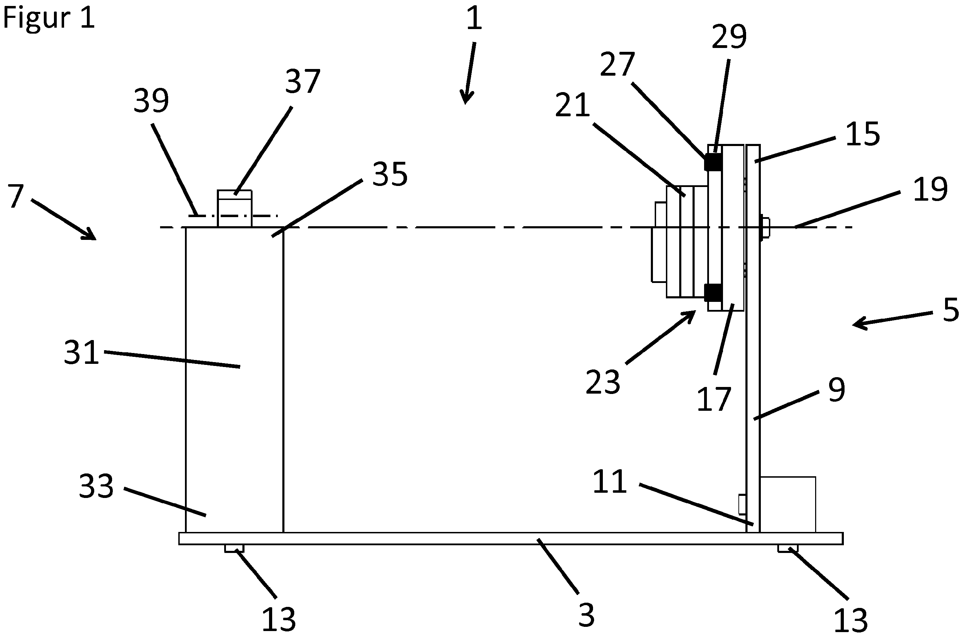

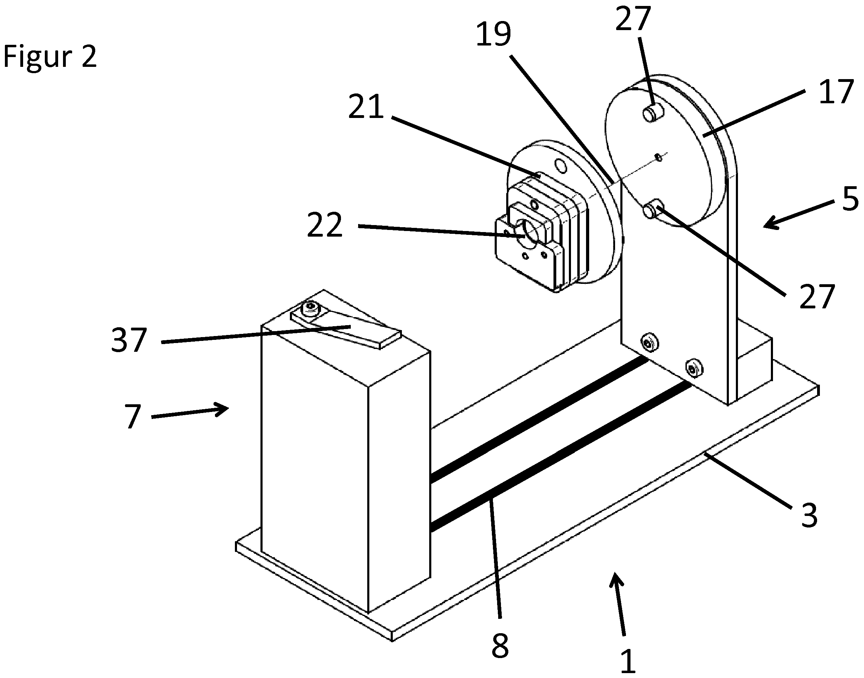

In den Figuren 1 und 2 ist eine Steckerlöthilfe 1 zum Anlöten von Einzel- und/oder Leitungsadern an einen Stecker (nicht dargestellt) gezeigt. Die Steckerlöthilfe 1 umfasst eine Platte 3, auf der ein Steckerhalter 5 sowie ein Leitungshalter 7 voneinander beabstandet angeordnet sind. Die Platte 3 weist Führungsschienen 8 auf, entlang derer der Steckerhalter 5 und der Leitungshalter 7 verschoben und in ihren gewünschten Positionen befestigt werden können.

Der Steckerhalter 5 umfasst einen ersten Standfuß 9, der an seinem ersten Ende 11 mit Hilfe von Befestigungsmitteln 13 an der Platte 3 fixiert ist. An einem zweiten gegenüberliegenden Ende 15 ist ein Grundkörper 17 angeordnet, der relativ zu dem Standfuß 9 um eine ortsfeste Drehachse 19 drehbar ist. Der erste Standfuß 9 kann in seiner Höhe variabel ausgebildet sein. Optional weist der Steckerhalter 5 einen Arretiermechanismus auf, der ausgebildet ist, den Grundkörper 17 in vordefinierten Winkelschritten, bevorzugt in Winkelschritten von 90 Grad, um die Drehachse 19 zu arretierten.

Der Steckerhalter 5 umfasst weiter einen austauschbaren Aufsatz 21 mit einer Steckeraufnahme 22 und eine Zentriereinrichtung 23 zum Zentrieren des Aufsatzes 21. Die Zentriereinrichtung 23 ist am Grundkörper 17 angeordnet und weiter ausgebildet, den Aufsatz 21 derart zu zentrieren, dass die Steckeraufnahme 22 mittig zur Drehachse 19 des Grundköpers 17 positioniert ist.

In den Figuren 1 und 2 ist ein Aufsatz 21 mit einer Steckeraufnahme 22 für einen Lemo-Steckverbinder gezeigt. Es versteht sich, dass aber auch andere Aufsätze 21 mit Steckeraufnahmen für weitere Steckertypen verwendet werden können, wie beispielweise Cinch-Stecker, DVI-Stecker, Firewire-Stecker, Klinkenstecker, PS/2-Stecker, S-Video-Stecker, VGA-Stecker und D-SUB Stecker.

Die Zentriereinrichtung 23 weist Führungselemente in Form von Führungsstiften 27 auf, die am Grundkörper 17 angeordnet sind und parallel zur Drehachse 19 verlaufen. Der Aufsatz 21 hat hierzu korrespondierende Ausnehmungen 29, die auf die Führungsstifte 27 aufsteckbar sind. Es ist aber ebenfalls denkbar, dass der Grundkörper 17 Ausnehmungen und der Aufsatz 21 Führungselemente in Form von Führungsstiften oder anderen geeigneten Führungselementen aufweist.

Der auf die Führungsstifte 27 aufgesteckte Aufsatz 21 kann beispielsweise durch Magnete oder eine Schraub-, Klemm- oder Spannvorrichtung an dem Grundkörper 17 gehalten werden.

Der Leitungshalter 7 weist einen zweiten Standfuß 31 auf, der an einem ersten Ende 33 ebenfalls mit Befestigungsmitteln 13 an der Platte 3 montiert ist. Der zweite Standfuß 31 kann ebenfalls in seiner Höhe variabel ausgebildet sein.

Des Weiteren weist der zweite Standfuß 31 an einem zweiten Ende 35 eine Klemmvorrichtung 37 zur Aufnahme und Fixierung von Leitungen oder Leitungs- und/oder Einzeladern auf. Die Leitung oder die Leitungsadern können einfach aus der Klemmvorrichtung 37 entnommen und um eine zweite Drehachse 39 gedreht werden, die parallel zu der Drehachse 19 des Grundkörpers 17 verläuft. Optional ist die Klemmvorrichtung 37 mit der Leitung oder den Leitungsadern um die zweite Drehachse 39 relativ zu dem zweiten Standfuß 31 drehbar und/oder arretierbar angeordnet. Optional fluchten die Drehachse 19 des Grundkörpers 17 und die zweite Drehachse 39 der Klemmvorrichtung 37 miteinander.

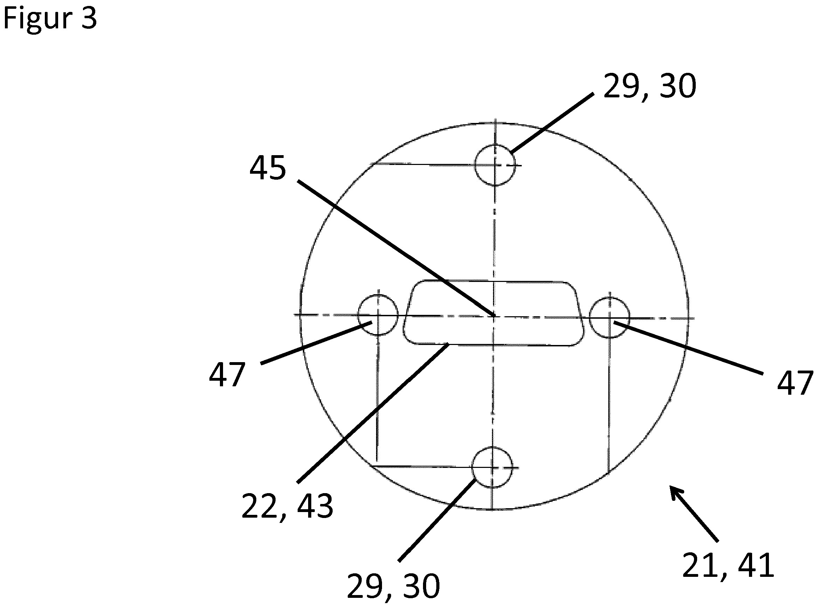

Figur 3 zeigt eine Ausführungsform des Aufsatzes 21 für einen kommerziell erhältlichen D-Sub Stecker im Detail. Der Aufsatz 21 ist als Scheibe 41 ausgebildet, die eine Steckeraufnahme 22 aufweist. Die Steckeraufnahme 22 ist eine Aussparung 43 die die Form eines D-Sub Steckergehäuses hat. Die Aussparung 43 ist mittig in dem Aufsatz 21 platziert, so dass ein in der Zeichenebene der Figur 3 liegender Flächenschwerpunkt 45 der Aussparung 43 mit dem Mittelpunkt der Scheibe 41 zusammenfällt. Wird der Aufsatz 21 auf die Führungsstifte 27 aufgesteckt, liegt der Flächenschwerpunkt 45 der Steckeraufnahme 22 bzw. der Mittelpunkt der Scheibe 41 auf der Drehachse 19 des Grundkörpers 17.

Der Aufsatz 21 ist ferner mit zwei Ausnehmungen 29 versehen, die als Bohrungen 30 oder beispielsweise in der Art eines Sacklochs ausgebildet sein können. Die Anzahl der Ausnehmungen 29 entspricht bevorzugt der Anzahl der auf dem Grundkörper 17 befestigten Führungsstifte 27 (Figur 2). Es versteht sich, dass auch andere zur Zentrierung des Aufsatzes 21 auf dem Grundkörper 17 geeignete Mittel denkbar sind.

Der Aufsatz 21 weist ferner zwei Magnete 47 auf, die den D-Sub Stecker, der in der Steckeraufnahme 22 aufgenommen ist, seitlich halten. Es ist aber auch denkbar, dass der Stecker in der Steckeraufnahme 22 durch eine Klemmvorrichtung, eine Spannvorrichtung oder eine Schraubverbindung oder durch Kombinationen aus einer magnetischen Halterung, einer Klemmvorrichtung, einer Spannvorrichtung und/oder einer Schraubverbindung gehalten wird.

Im Folgenden soll das Verfahren zum Verbinden von Steckern mit Einzel- und/oder Leitungsadern mit Hilfe der erfindungsgemäßen Steckerlöthilfe 1 beschreiben werden.

In einem ersten Verfahrensschritt werden die Steckerlöthilfe 1, die Einzel- und/oder Leitungsadern sowie der zu verlötende Stecker bereitgestellt.

Danach wird in Abhängigkeit des zu verlötenden Steckers ein Aufsatz 21 ausgewählt, dessen Steckeraufnahme 22 geeignet ist, den entsprechenden Stecker aufzunehmen.

Der Aufsatz 21 wird mit seinen Ausnehmungen in Form von Bohrungen 29 auf die Führungsstifte 27 am Grundkörper 17 aufgeschoben und am Grundkörper 17 fixiert. Dadurch wird der Aufsatz 21 mit Hilfe der Zentriereinrichtung 23 am Grundkörper 17 derart zentriert, dass die Steckeraufnahme 22 mittig zur Drehachse 19 des Grundköpers 17 positioniert ist.

Der zu verlötende Stecker wird in die Steckeraufnahme 22 eingeführt und dort mithilfe von Magneten 47 fixiert.

Die zu verlötenden Einzel- und/oder Leitungsadern werden in der Klemmvorrichtung 37 des Leitungshalters 7 geklemmt.

Optional können Einzeladern mit Hilfe einer zusätzlichen Klemme (nicht dargestellt) in unmittelbarer Nähe des Steckers, an dem die Einzelader verlötet werden soll, positioniert werden. Die Klemme kann beispielsweise am ersten Standfuß 9 befestigt sein.

Die Einzel- und/oder Leitungsadern werden dann mit den Steckerkontakten des Steckers verlötet, wobei der Stecker mit der Steckeraufnahme 22 und dem Grundkörper 17 um die erste Drehachse 19 und optional die Einzel- und/oder Leitungsadern um die zweite Drehachse 39 gedreht werden können. Weiter optional kann der Stecker mit Hilfe eines Arretiermechanismus in einzelnen Winkelschritten arretiert werden.

Nach Beendigung des Lötvorgangs werden der Stecker aus der Steckeraufnahme 22 und die Einzel- und/oder Leitungsadern aus der Klemmvorrichtung 37 entnommen.

## Patentansprüche

1. Steckerlöthilfe (1) zum Anlöten von Einzel- und/oder Leitungsadern an einen Stecker umfassend,
- einen Steckerhalter (5) mit einem ersten Standfuß (9) und
- einen Leitungshalter (7) mit einem zweiten Standfuß (31),
wobei der Steckerhalter (5) einen Grundkörper (17) aufweist, der an dem ersten Standfuß (9) angeordnet und relativ zu diesem um eine Drehachse (19) drehbar ist,
**dadurch gekennzeichnet, dass**
- die Drehachse (19) ortsfest ist und
- der Steckerhalter (5) weiter
- einen austauschbaren Aufsatz (21, 41) mit einer Steckeraufnahme (22, 43) und
- eine Zentriereinrichtung (23) zum Zentrieren des Aufsatzes (21, 41) umfasst,
wobei die Zentriereinrichtung (23) am Grundkörper (17) angeordnet und weiter ausgebildet ist, den Aufsatz (21, 41) derart zu zentrieren, dass die Steckeraufnahme (22, 43) mittig zur Drehachse (19) des Grundköpers (17) positioniert ist.

2. Steckerlöthilfe (1) nach Anspruch 1, **dadurch gekennzeichnet, dass** der Leitungshalter (7) eine Klemmvorrichtung (37) aufweist, wobei die Drehachse (19) des Grundkörpers (17) in Richtung der Klemmvorrichtung (37) der Leitungshalter (7) zeigt.

3. Steckerlöthilfe (1) nach Anspruch 1, **dadurch gekennzeichnet, dass** die Klemmvorrichtung (37) des Leitungshalters (7) relativ zu dem zweiten Standfuß (31) um eine zweite Drehachse (39) drehbar und arretierbar ist, wobei die Drehachse (19) des Grundkörpers (17) und die zweite Drehachse (39) der Klemmvorrichtung (37) parallel zueinander angeordnet sind.

4. Steckerlöthilfe (1) nach einem der vorherigen Ansprüche, **dadurch gekennzeichnet, dass** der Steckerhalter (5) einen Arretiermechanismus aufweist, der ausgebildet ist, den Grundkörper (21) in vordefinierten Winkelschritten um die Drehachse (19) zu arretierten oder, eine manuelle Arretierung des Grundkörpers (21) in beliebig wählbaren Winkelschritten zu ermöglichen.

5. Steckerlöthilfe (1) nach Anspruch 4, **dadurch gekennzeichnet, dass** der Arretiermechanismus ausgebildet ist, den Grundkörper (21) in 90 Grad Winkelschritten um die Drehachse (19) zu arretierten.

6. Steckerlöthilfe (1) nach einem der vorherigen Ansprüche, **dadurch gekennzeichnet, dass** die Zentriereinrichtung (23) wenigstens ein Führungselement (27) aufweist, das am Grundkörper (17) angeordnet ist und, der Aufsatz (21) wenigstens eine Ausnehmung (29, 30) umfasst, wobei die Ausnehmung (2, 30) auf das Führungselement (27) aufsteckbar ist.

7. Steckerlöthilfe (1) nach einem der vorherigen Ansprüche, **dadurch gekennzeichnet, dass** der Aufsatz (21, 41) ausgebildet ist, den Stecker in der Steckeraufnahme (22, 43) zu klemmen, einzuspannen oder mittels Schrauben oder Magneten (47) zu fixieren.

8. Steckerlöthilfe (1) nach einem der vorherigen Ansprüche, **dadurch gekennzeichnet, dass** der Aufsatz (21) an dem Grundkörper (17) geklemmt, gespannt, geschraubt oder magnetisch fixiert ist.

9. Steckerlöthilfe (1) nach einem der vorherigen Ansprüche, **dadurch gekennzeichnet, dass** die Steckeraufnahme (22, 43) des Aufsatzes (21, 41) geeignet ist, einen kommerziell erhältlichen Stecker aufzunehmen.

10. Steckerlöthilfe (1) nach einem der vorherigen Ansprüche, **dadurch gekennzeichnet, dass** die Steckeraufnahme (22, 43) des Aufsatzes (21, 41) geeignet ist, einen D-Sub Stecker und/oder einen Lemo-Stecker aufzunehmen.

11. Steckerlöthilfe (1) nach einem der vorherigen Ansprüche, **dadurch gekennzeichnet, dass** der Steckerhalter (5) eine Klemme aufweist, bevorzugt ist die Klemme an einem flexiblen Arm befestigt.

12. Steckerlöthilfe (1) nach einem der vorherigen Ansprüche, **dadurch gekennzeichnet, dass** der Steckerhalter (5) und die Leitungshalter (7) auf einer Platte (3) befestigt sind, bevorzugt in verschieden wählbaren Abständen voneinander.

13. Steckerlöthilfe (1) nach einem der vorherigen Ansprüche, **dadurch gekennzeichnet, dass** der Steckerhalter (5) und/oder die Leitungshalter (7) in der Höhe verstellbar sind.

14. Verfahren zum Verbinden von Steckern mit Einzel- und/oder Leitungsadern mit Hilfe der Steckerlöthilfe (1) nach einem der vorherigen Ansprüche.

## Claims

1. Connector-soldering aid (1) for soldering single and/or cable wires to a connector, comprising
- a connector mount (5) with a first stand (9) and
- a cable mount (7) with a second stand (31),
wherein the connector mount (5) has a base body (17), which is arranged on the first stand (9) and is rotatable relative to the latter about an axis of rotation (19),
**characterized in that**
- the axis of rotation (19) is fixed and
- the connector mount (5) further comprises
- a replaceable attachment (21, 41) with a connector receiver (22, 43) and
- a centring device (23) for centring the attachment (21, 41),
wherein the centring device (23) is arranged on the base body (17) and is further formed to centre the attachment (21, 41) such that the connector receiver (22, 43) is positioned centrally in relation to the axis of rotation (19) of the base body (17).

2. Connector-soldering aid (1) according to claim 1, **characterized in that** the cable mount (7) has a clamping device (37), wherein the axis of rotation (19) of the base body (17) points in the direction of the clamping device (37) of the cable mount (7).

3. Connector-soldering aid (1) according to claim 1, **characterized in that** the clamping device (37) of the cable mount (7) is rotatable and lockable relative to the second stand (31) about a second axis of rotation (39), wherein the axis of rotation (19) of the base body (17) and the second axis of rotation (39) of the clamping device (37) are arranged parallel to each other.

4. Connector-soldering aid (1) according to one of the previous claims, **characterized in that** the connector mount (5) has a locking mechanism, which is formed to lock the base body (21) in predefined angular steps about the axis of rotation (19) or to make it possible to manually lock the base body (21) in angular steps which can be selected as desired.

5. Connector-soldering aid (1) according to claim 4, **characterized in that** the locking mechanism is formed to lock the base body (21) in 90-degree angular steps about the axis of rotation (19).

6. Connector-soldering aid (1) according to one of the previous claims, **characterized in that** the centring device (23) has at least one guide element (27), which is arranged on the base body (17), and the attachment (21) comprises at least one recess (29, 30), wherein the recess (2, 30) can be fitted onto the guide element (27).

7. Connector-soldering aid (1) according to one of the previous claims, **characterized in that** the attachment (21, 41) is formed to clamp, grip or, by means of screws or magnets (47), fix the connector in the connector receiver (22, 43).

8. Connector-soldering aid (1) according to one of the previous claims, **characterized in that** the attachment (21) is clamped, gripped, screwed or magnetically fixed to the base body (17).

9. Connector-soldering aid (1) according to one of the previous claims, **characterized in that** the connector receiver (22, 43) of the attachment (21, 41) is suitable for receiving a commercially available connector.

10. Connector-soldering aid (1) according to one of the previous claims, **characterized in that** the connector receiver (22, 43) of the attachment (21, 41) is suitable for receiving a D-Sub connector and/or a LEMO connector.

11. Connector-soldering aid (1) according to one of the previous claims, **characterized in that** the connector mount (5) has a clamp, preferably the clamp is secured to a flexible arm.

12. Connector-soldering aid (1) according to one of the previous claims, **characterized in that** the connector mount (5) and the cable mount (7) are secured on a board (3), preferably at distances from each other which can be selected differently.

13. Connector-soldering aid (1) according to one of the previous claims, **characterized in that** the connector mount (5) and/or the cable mount (7) are height-adjustable.

14. Method for joining connectors to single and/or cable wires with the aid of the connector-soldering aid (1) according to one of the previous claims.

## Revendications

1. Gabarit (1) pour positionner des pièces à braser, en vue du brasage de brins individuels et/ou de brins de conducteur sur un connecteur, comprenant
- un support de connecteur (5) doté d'un premier montant (9), et
- un support de conducteur (7) doté d'un deuxième montant (31),
le support de connecteur (5) présentant un corps de base (17) qui est disposé sur le premier montant (9) et peut être tourné autour d'un axe de rotation (19) par rapport à celui-ci,
**caractérisé en ce que**
- l'axe de rotation (19) est fixe et
- le support de connecteur (5) comprend en outre
- un élément rapporté (21, 41) échangeable, comportant un logement de connecteur (22, 43), et
- un dispositif de centrage (23) destiné au centrage de l'élément rapporté (21, 41),
le dispositif de centrage (23) étant monté sur le corps de base (17) et étant par ailleurs agencé pour centrer l'élément rapporté (21, 41), de manière à ce que le logement de connecteur (22, 43) soit positionné de façon centrée par rapport à l'axe de rotation (19) du corps de base (17).

2. Gabarit (1) pour positionner des pièces à braser selon la revendication 1, **caractérisé en ce que** le support de conducteur (7) présente un dispositif de serrage (37), l'axe de rotation (19) du corps de base (17) étant orienté en direction du dispositif de serrage (37) du support de conducteur (7).

3. Gabarit (1) pour positionner des pièces à braser selon la revendication 1, **caractérisé en ce que** le dispositif de serrage (37) du support de conducteur (7) peut être tourné autour d'un deuxième axe de rotation (39) par rapport au deuxième montant (31) et peut être bloqué, l'axe de rotation (19) du corps de base (17) et le deuxième axe de rotation (39) du dispositif de serrage (37) étant disposés parallèlement l'un à l'autre.

4. Gabarit (1) pour positionner des pièces à braser selon une des revendications précédentes, **caractérisé en ce que** le support de connecteur (5) présente un mécanisme de blocage qui est agencé pour bloquer le corps de base (21) avec des intervalles angulaires prédéfinis autour de l'axe de rotation (19), ou pour permettre un blocage manuel du corps de base (21) avec des intervalles angulaires pouvant être librement choisis.

5. Gabarit (1) pour positionner des pièces à braser selon la revendication 4, **caractérisé en ce que** le mécanisme de blocage est agencé pour bloquer le corps de base (21) avec des intervalles angulaires de 90 degrés autour de l'axe de rotation (19).

6. Gabarit (1) pour positionner des pièces à braser selon une des revendications précédentes, **caractérisé en ce que** le dispositif de centrage (23) présente au moins un élément de guidage (27) qui est disposé sur le corps de base (17), et que l'élément rapporté (21) comprend au moins un évidement (29, 30), sachant que l'évidement (2, 30) peut être emboîté sur l'élément de guidage (27).

7. Gabarit (1) pour positionner des pièces à braser selon une des revendications précédentes, **caractérisé en ce que** l'élément rapporté (21, 41) est agencé pour serrer, bloquer ou fixer avec des vis ou des aimants (47) le connecteur dans le logement de connecteur (22, 43).

8. Gabarit (1) pour positionner des pièces à braser selon une des revendications précédentes, **caractérisé en ce que** l'élément rapporté (21) est serré, bloqué, vissé ou fixé par des aimants sur le corps de base (17).

9. Gabarit (1) pour positionner des pièces à braser selon une des revendications précédentes, **caractérisé en ce que** le logement de connecteur (22, 43) de l'élément rapporté (21, 41) est adapté pour recevoir un connecteur disponible dans le commerce.

10. Gabarit (1) pour positionner des pièces à braser selon une des revendications précédentes, **caractérisé en ce que** le logement de connecteur (22, 43) de l'élément rapporté (21, 41) est adapté pour recevoir un connecteur D-Sub et/ou un connecteur Lemo.

11. Gabarit (1) pour positionner des pièces à braser selon une des revendications précédentes, **caractérisé en ce que** le support de connecteur (5) présente une pince, et cette pince est de préférence fixée à un bras souple.

12. Gabarit (1) pour positionner des pièces à braser selon une des revendications précédentes, **caractérisé en ce que** le support de connecteur (5) et le support de conducteur (7) sont fixés sur une plaque, de préférence à des distances réciproques qui peuvent être choisies avec des valeurs différentes.

13. Gabarit (1) pour positionner des pièces à braser selon une des revendications précédentes, **caractérisé en ce que** le support de connecteur (5) et/ou le support de conducteur (7) sont réglables en hauteur.

14. Procédé permettant de relier des connecteurs à des brins individuels et/ou des brins de conducteurs, à l'aide du gabarit (1) pour positionner des pièces à braser selon une des revendications précédentes.
